# EUROPEAN PATENT SPECIFICATION

(11) **EP 1 327 551 B1**
(45) Date of publication and mention of the grant of the patent: **14.02.2007**
(21) Application number: 02028809.8
(22) Date of filing: 23.12.2002
(51) Int. Cl.: B60K 28/16

(54) **Vehicular control device and vehicular control method**
Fahrzeugsteuervorrichtung und Fahrzeugsteuerverfahren
Dispositif de contrôle de véhicule et procédé de contrôle de véhicule

(30) Priority: 09.01.2002 JP 2002002761
(43) Date of publication of application: 16.07.2003
(73) Proprietor: Toyota Jidosha Kabushiki Kaisha, Toyota-shi, Aichi-ken, 471-8571 (JP)
(72) Inventor: Hirose, Taro, Toyota-shi, Aichi-ken, 471-8571 (JP); Endo, Hiroaki, Toyota-shi, Aichi-ken, 471-8571 (JP); Kato, Masayuki, Toyota-shi, Aichi-ken, 471-8571 (JP)
(74) Representative: Winter, Brandl, Fürniss, Hübner Röss, Kaiser, Polte Partnerschaft Patent- und Rechtsanwaltskanzlei

(56) References cited:
- EP-A- 0 355 975
- DE-A1- 3 605 600
- DE-A1- 3 630 750
- PATENT ABSTRACTS OF JAPAN vol. 015, no. 232 (M-1124), 13 June 1991 (1991-06-13) -& JP 03 070638 A (NIPPONDENSO CO LTD), 26 March 1991 (1991-03-26)
- PATENT ABSTRACTS OF JAPAN vol. 014, no. 379 (M-1012), 16 August 1990 (1990-08-16) -& JP 02 141337 A (FUJITSU LTD; others: 03), 30 May 1990 (1990-05-30)

## Description

### BACKGROUND OF THE INVENTION

### 1. Field of the Invention

The invention relates to a vehicular control device and a vehicular control method for controlling an engine output in accordance with a slip state of driving wheels.

### 2. Description of the Related Art

There has long been known a traction control (hereinafter referred to as "TRC") system that suppresses a tendency of acceleration slip and enhances running stability of a vehicle by applying predetermined braking forces to driving wheels and reducing an engine output if a slip state of the driving wheels indicates a large amount of slip during takeoff or acceleration of the vehicle.

For example, in a vehicle equipped with a manual transmission, if gear change is carried out during the performance of TRC as described above, a disengaged state of a clutch changes during the gear change. If the clutch is disengaged, transmission of a driving force to the side of the driving wheels is temporarily shut off. As soon as the clutch is connected, the driving force is again transmitted to the side of the driving wheels. Hence, in some cases, the amount of slip increases when the clutch is connected.

As an example, JP 3-70638 A discloses an art wherein two states of a clutch, that is, an engaged (connected) state and a disengaged (disconnected) state are detected, wherein an engine output is restricted if the clutch becomes disengaged during TRC, and wherein the occurrence of slip in the case where the clutch is engaged again is thereby prevented.

However, if an engine output is thus restricted during TRC on the basis of two states of a clutch, that is, an engaged state and a disengaged state, a target driving torque to be transmitted to driving wheels is set as an excessively low value. As a result, a vehicle may not be able to sufficiently perform an accelerating function when the clutch is connected.

If the clutch is disengaged at the time of gear change, the transmission efficiency of a driving torque becomes equal to zero. In this case, slip of the driving wheels shifts in a converging direction in which the amount of slip decreases. Hence, in a TRC system that performs control to suppress an engine output with a view to suppressing acceleration slip, the engine output suppressed by TRC is returned to its original value in response to a situation in which slip of the driving wheels shifts in the converging direction. Then, a processing is performed to cause an increase in target driving torque. Thus, the driving wheels are driven when the clutch becomes engaged at the time of termination of a gear change operation, whereby the amount of slip of the driving wheels increases and TRC is activated again. That is, so-called hunting is caused in some cases.

EP 0 355 375 A2 discloses a vehicular control device and method in accordance with the preambles of claims 1 and 7, respectively.

### SUMMARY OF THE INVENTION

It is an object of the invention to provide a vehicular control device and method that can perform suitable traction control even in the case where a state of engagement or disengagement of a clutch has changed during the performance of traction control which also includes a control of adjusting engine output.

A vehicular control device according to the invention is designed to control an engine output in accordance with a slip state of driving wheels, and comprises slip state detecting portion for detecting the slip state of the driving wheels, clutch mechanism portion for changing a transmission state of an engine output through a change in engagement state, transmission degree detecting portion for detecting a degree of transmission of the engine output that is transmitted via the clutch mechanism portion, and engine output control portion for controlling an engine output in accordance with a degree of transmission of the engine output detected by the transmission degree detecting portion and the slip state of the driving wheels detected by the slip state detecting portion.

More specifically, the engine output is reduced if the degree of transmission of the engine output is lower than a predetermined value in the case where the slip state detected by the slip state detecting portion indicates an increasing amount of slip. The engine output may be increased if the degree of transmission of the engine output is higher than a predetermined value in the case where the slip state indicates a converging amount of slip.

In this manner, the engine output control portion controls an engine output in accordance with the slip state of the driving wheels in consideration of a degree of transmission of the engine output. Therefore, even in the case where the degree of transmission in the clutch mechanism portion has changed, slip suppression control of the driving wheels is suitably performed.

Further, the vehicular control device may be designed such that the clutch mechanism portion is provided with a first actuator that serves as a drive source for changing a state of engagement, and may further comprises gear-shift mechanism portion having a plurality of gear-shift stages for changing a speed of an engine output that is transmitted via the clutch mechanism portion and a second actuator serving as a drive source for changing a meshing state of gear trains constituting each of the gear-shift stages, and sequential manual transmission control portion for performing operational control of the first and second actuators in accordance with a manual operation for setting a gear-shift stage.

In this manner, in a vehicle equipped with a so-called SMT (sequential manual transmission) in which an SMT control portion automatically performs operations of making a gear shift in a transmission and engaging or disengaging a clutch in accordance with an operation of selecting a gear-shift stage, slip suppression control of the driving wheels is suitably performed even in the case where the degree of transmission in the clutch mechanism portion has changed.

Furthermore, a vehicular control method according to the invention comprises a step of detecting a degree of transmission of the engine output, a step of detecting a slip state of the driving wheels, and a step of controlling the engine output in accordance with the detected degree of transmission of the engine output and the detected slip state of the driving wheels.

The step of controlling the engine output is designed to reduce the engine output if the degree of transmission of the engine output is lower than a predetermined value during an increase in slip amount. Furthermore, this step of controlling the engine output may be designed to increase the engine output if the degree of transmission of the engine output is higher than a predetermined value during conversion of slip amount.

In the construction as described above as well, the engine output is controlled in accordance with the slip state of the driving wheels in consideration of a degree of transmission of the engine output. Therefore, even in the case where the degree of transmission in the clutch mechanism portion has changed, slip suppression control of the driving wheels is suitably performed.

It is to be noted herein that the degree of transmission may be based on an actual engine speed, an engine speed based on a rotational speed of the driving wheels, and a total gear ratio. The degree of transmission may also be based on a depression amount of the clutch pedal or a bearing stress applied to a surface of the clutch.

### BRIEF DESCRIPTION OF THE DRAWINGS

Fig. 1 is a block diagram schematically showing a power transmission system and a control system of a vehicle in accordance with an embodiment of the invention.
Fig. 2 is a flowchart showing control processings that are performed in a TRC portion.
Fig. 3 is a vectorial view showing a method of estimating a friction coefficient µ of a road surface.
Fig. 4 is a flowchart showing the control processing that is performed in step S200 in the flowchart shown in Fig. 2.
Fig. 5 is an explanatory view showing a relationship between clutch engagement evaluating value and correction coefficient K1.

### DETAILED DESCRIPTION OF PREFERRED EMBODIMENT

Hereinafter, an embodiment of the invention will be described with reference to the accompanying drawings.

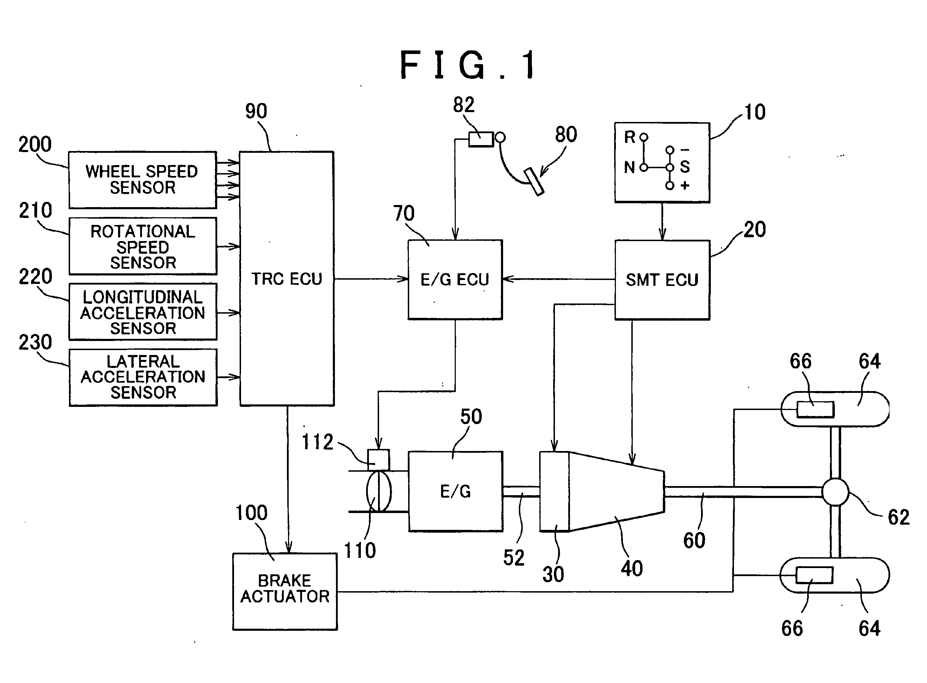

Fig. 1 schematically shows the construction of a vehicular control device in accordance with the embodiment. This vehicle is equipped with an SMT (sequential manual transmission) that automatically performs operations of making a gear shift of a transmission and disengaging a clutch in accordance with an operation of selecting a gear-shift stage.

A shift lever device 10 is provided with an N (neutral) position and an R (reverse) position, which are arranged along the longitudinal direction of the vehicle. When the vehicle moves forwards, a shift lever is operated along the lateral direction of a vehicle body and thus is shifted from the N position to an S position. If the shift lever is operated toward a "+" side that indicates a direction of approaching a driver, an upshift operation of the transmission is performed. If the shift lever is operated toward a "-" side that indicates a direction of moving away from the driver, a downshift operation of the transmission is performed.

The shift lever device 10 has a mechanism in which the shift lever returns to the neutral S position if the driver stops holding the shift lever in response to an operation of the shift lever toward the "+" side or the "-" side. It is to be noted herein that the upshift portion shifting a gear-shift stage in such a manner as to reduce a gear-shift ratio (reduction ratio = amount of rotation of an input shaft of the transmission / amount of rotation of an output shaft of the transmission) of the transmission, and that the downshift portion shifting a gear-shift stage in such a manner as to increase this gear-shift ratio.

Such information regarding operation of the shift lever is delivered to an SMT control portion 20. The SMT control portion 20 performs operational controls of a clutch mechanism portion 30 and a gear-shift mechanism portion 40 on the basis of information regarding operation of the shift lever, wheel speeds as rotational speeds of driving wheels 64, and the like.

The clutch mechanism portion 30 constitutes a so-called automatic clutch, which is composed of a friction clutch and a drive motor (first actuator) for changing a state of engagement of the friction clutch. The clutch mechanism portion 30 has a mechanism in which the friction clutch is engaged or released by rotationally driving the drive motor in the positive or reverse direction. The gear-shift mechanism portion 40 is provided with a reverse gear stage, a plurality of forward gear stages, and an actuator for gear shift (second actuator). The gear-shift mechanism portion 40 has a mechanism in which meshing states of respective gear mechanisms are shifted by driving the actuator for gear shift.

Thus, a rotational output from an engine 50 is transmitted to a propeller shaft 60 via the clutch mechanism portion 30 and the gear-shift mechanism portion 40. Furthermore, a rotation of the propeller shaft 60 is transmitted to the left and right driving wheels 64 via a differential 62.

During a series of such gear change controls, a control of adjusting engine output is simultaneously performed as well such that a difference between a rotational speed of an output shaft 52 of the engine 50 and a rotational speed of an input shaft (not shown) of the gear-shift mechanism portion 40 comes into a suitable range. Hence, when performing this gear-shift (gear-change) control, the SMT control portion 20 outputs a required value of engine output as a value suited for SMT control to an engine control portion 70 that performs control of engine output.

Furthermore, a traction control (TRC) system is also installed. If the driving wheels 64 assume a state with a large amount of slip during takeoff or acceleration of the vehicle, the TRC system applies predetermined braking forces to the driving wheels 64 and reduces an engine output. In the TRC system, control processings are performed in a TRC portion 90.

A detection result of a wheel speed sensor 200 and detection results of a rotational speed sensor 210, a longitudinal acceleration sensor 220, and a lateral acceleration sensor 230 are delivered to the TRC portion 90. It is to be noted herein that the wheel speed sensor 200 individually detects wheel speeds of four wheels. The rotational speed sensor 210 detects an engine speed. The longitudinal acceleration sensor 220 detects an acceleration that is applied in the longitudinal direction of the vehicle. The lateral acceleration sensor 230 detects an acceleration that is applied in the lateral direction of the vehicle. The TRC portion 90 outputs a hydraulic pressure indicating value to a brake actuator 100 that controls brake pressures applied to brake devices 66 for the wheels, on the basis of a difference between a wheel speed of the driving wheels 64 and a wheel speed of driven wheels (not shown). At the same time, the TRC portion 90 calculates a required value of engine output as a value suited for traction control, and outputs the required value to the engine control portion 70.

An operation amount of an accelerator pedal 80 detected by an accelerator pedal sensor 82, an engine speed detected by the rotational speed sensor 210, and the like are delivered to the engine control portion 70. The engine control portion 70 calculates an engine output required by the driver, on the basis of the values thus delivered.

In this manner, a required value of engine output based on operation of the accelerator pedal 80 and the like is calculated in the engine control portion 70. In addition, if the vehicle assumes a certain running state, a required value of engine output from the SMT control portion 20 and a required value of engine output from the TRC portion 90 are also delivered to the engine control portion 70. Then, the engine control portion 70 selects one of the required values. The engine control portion 70 outputs a value indicating an opening of a throttle valve 110 corresponding to the selected required value of engine output to a throttle driving portion 112.

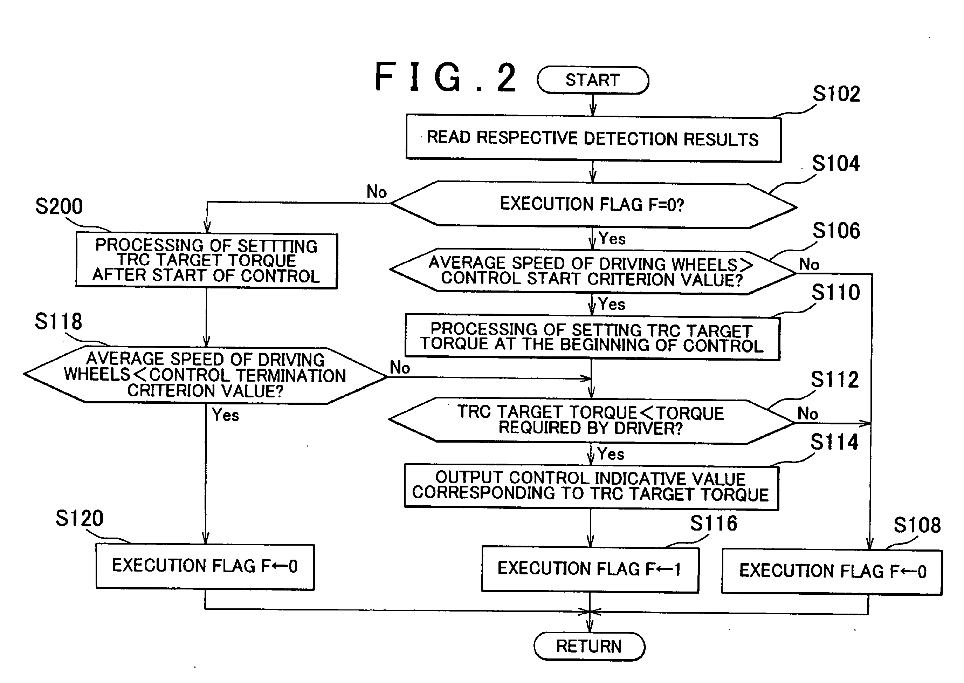

The control processings performed in the TRC portion 90 will now be described with reference to the flowchart shown in Fig. 2. In the TRC system as a rule, both a control of brake pressures applied to the brake devices 66 and a control of adjusting engine output are performed. However, the following description will deal with the control of adjusting engine output.

This flowchart is activated by turning an ignition switch on. First of all, the operation proceeds to step (hereinafter referred to as "S") 102, and detection results of the above-mentioned sensors are read. The operation then proceeds to S104. It is determined in S104 whether or not an execution flag F indicating whether or not TRC has been activated assumes a value of 0, that is, whether or not TRC is inactive.

If TRC has not been activated, the result of S104 is determined as "Yes", and the operation proceeds to S106. To determine whether or not a condition for starting TRC has been fulfilled, it is determined in S106 whether or not an average wheel speed of the driving wheels is higher than a control start criterion value that is set in accordance with a running state of the vehicle. For example, the control start criterion value is set as a value obtained by adding a predetermined value to an average wheel speed of the driven wheels at this moment.

If the average wheel speed of the driving wheels is equal to or lower than the control start criterion value, the result of S106 is determined as "No", and the operation proceeds to S108. The execution flag F is set equal to 0 to indicate that TRC has not been activated, and the present routine is terminated.

On the other hand, if the average wheel speed of the driving wheels is higher than the control start criterion value, the result of S106 is determined as "Yes", and the operation proceeds to S110. A TRC target torque as a control indicative value of engine output at the beginning of TRC is set in S110. For example, the TRC target torque at the beginning of the control is set on the basis of an equation shown below.

TRC target torque = estimated value of friction coefficient µ of road surface * driving wheel axle load * tire diameter / (differential ratio * gear ratio)

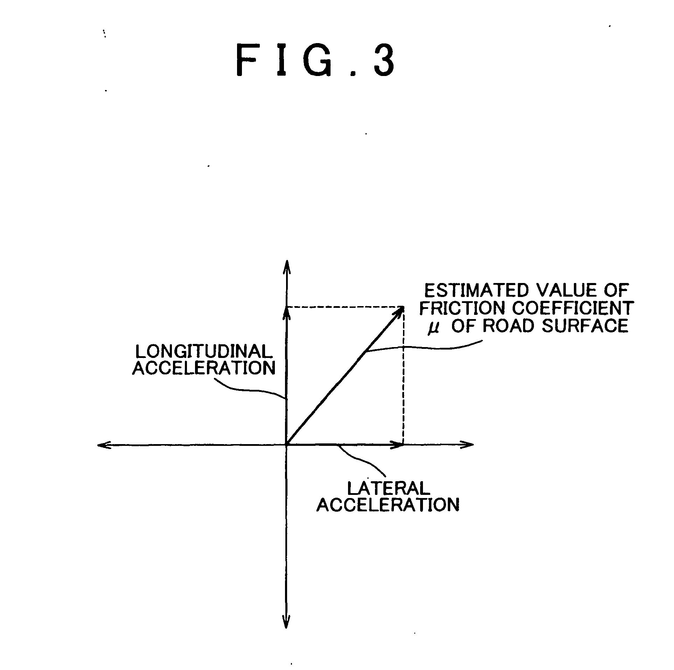

In the above-mentioned equation, an "estimated value of friction coefficient µ of road surface" can be calculated as a vectorial sum of a lateral acceleration vector and a longitudinal acceleration vector that are perpendicular to each other, for example, on the basis of a lateral acceleration and a longitudinal acceleration of the vehicle, which are obtained from detection results of the sensors (see Fig. 3). As an alternative, estimation can also be made on the basis of a detection result of a sensor for detecting an uneven state of a road surface. "Driving wheel axle load" portion a so-called ground load applied to the driving wheels. In some cases, the driving wheel axle load is obtained as detection results of axle load sensors provided for the driving wheels respectively. As an alternative, the driving wheel axle load can also be calculated by grasping a load shift situation of the vehicle on the basis of a lateral acceleration and a longitudinal acceleration applied to the vehicle and referring to the grasped result. "Gear ratio" means a gear ratio (gear-shift ratio) that is set in the gear-shift mechanism portion 40 at this moment, and can be set, for example, on the basis of gear-shift stage information delivered from the SMT control portion 20. "Differential ratio" means a gear ratio of the differential 62. It is to be noted herein that "tire diameter" can be set, for example, as a fixed value that is equal to a diameter of tires of standard specification.

After a TRC target torque at the beginning of TRC has thus been set, the operation proceeds to S112. It is then determined whether or not the TRC target torque that has been set in S110 or later-described S200 is smaller than a torque required by the driver.

A torque required by the driver can be calculated on the basis of an operation amount of the accelerator pedal 80 and an engine speed. In the case where a torque required by the driver is not successively calculated, it is appropriate, for example, that required values of engine output calculated in accordance with operation amount of the accelerator pedal 80 and engine speed be stored in advance as a map, that a search of this map be conducted on the basis of an operation amount of the accelerator pedal 80 and an engine speed, and that a required value of engine output required by the driver be set. Because this processing is performed in the engine control portion 70 as well, it is also appropriate that a calculated result be read from the engine control portion 70.

If the torque required by the driver is equal to or lower than the TRC target torque as a result of the determination in S112 (if the result of S112 is determined as "No"), TRC for suppressing an engine output in response to a driving operation performed by the driver is unnecessary. Thus, the operation proceeds to S108, the execution flag F is set equal to 0, and the present routine is terminated without activating TRC.

On the other hand, if the TRC target torque is lower than a torque required by the driver (if the result of S112 is determined as "Yes"), the control proceeds to S114. In S114, a control indicative value corresponding to the TRC target torque is output to the engine control portion 70, whereby the engine control portion 70 outputs a value indicating an opening of the throttle valve 110 as a value corresponding to this control indicative value to the throttle driving portion 112. Then, the opening of the throttle valve 110 changes, and a predetermined engine output is obtained.

The control proceeds to S116, and the execution flag F is set equal to 1 to indicate that TRC has been activated. The present routine is then terminated.

In the next routine, since the execution flag has been set equal to 1, the result of S104 is determined as "No". The control proceeds to S200, and a processing of setting a TRC target torque after the start of the control is performed. It is to be noted herein that this processing will be described later in detail.

After the TRC target torque has been set in S200, the control proceeds to S118. To determine whether or not a condition for terminating TRC has been fulfilled, it is determined in S118 whether or not an average wheel speed of the driving wheels is lower than a control termination criterion value that is set in accordance with a running state of the vehicle. The control termination criterion value is set, for example, as a value obtained by adding a predetermined value to an average wheel speed of the driven wheels at this moment.

If the average wheel speed of the driving wheels is higher than the control termination criterion value (if the result of S118 is determined as "No"), that is, if the condition for terminating TRC has not been fulfilled, the control proceeds to the above-mentioned processing in S112. On the other hand, if the average wheel speed of the driving wheels is lower than the control termination criterion value (if the result of S118 is determined as "Yes"), that is, if the condition for terminating TRC has been fulfilled, the control proceeds to S120. and the execution flag F is set equal to 0 to indicate that TRC has been terminated. The present routine is then terminated.

By repeatedly performing the processing as described above, engine output control in TRC is performed.

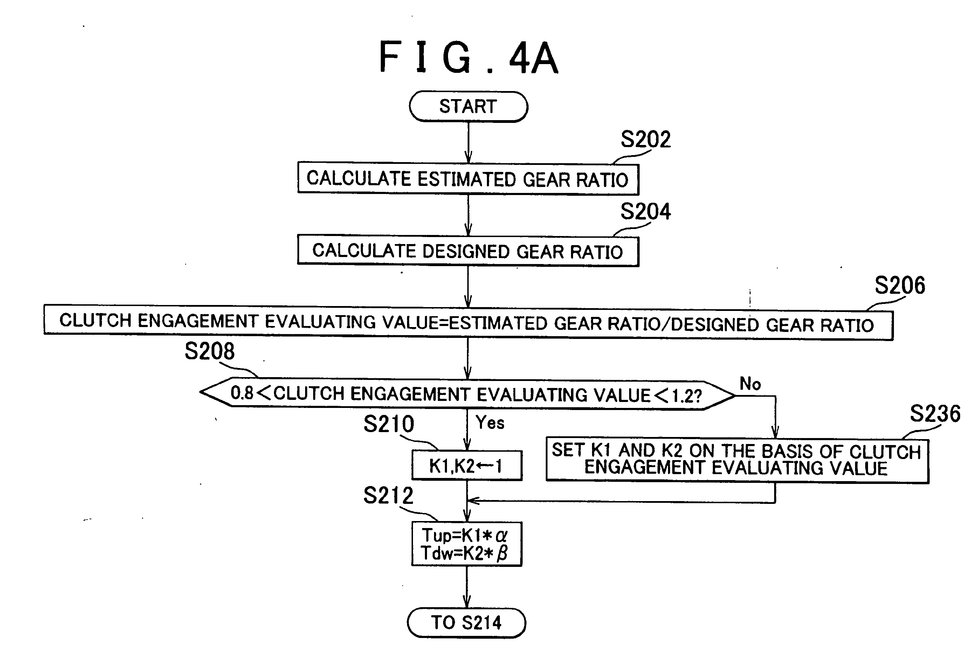

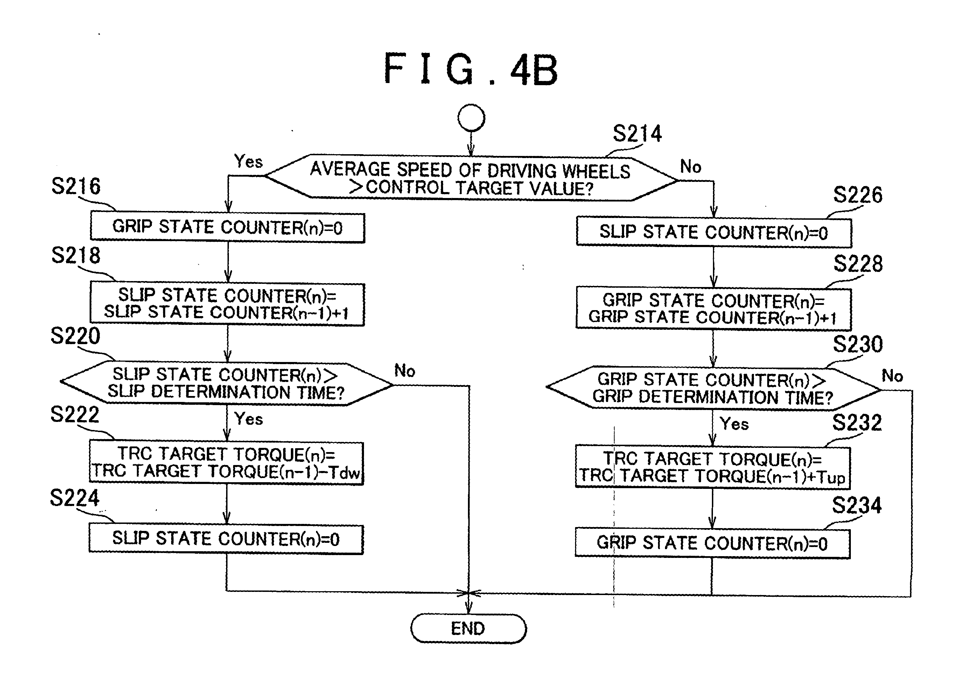

A processing that is performed in S200 of Fig. 2 to set a TRC target value after the beginning of control will now be described with reference to a flowchart shown in Fig. 4.

First of all in S202, a total gear ratio (reduction ratio) between the gear-shift mechanism portion 40 and the differential 62 is estimated from an engine speed and a converted value obtained by converting an average speed of the driving wheels into a rotational speed. Calculation is made according to an equation: the estimated gear ratio = engine speed / (converted value obtained by converting average speed of driving wheels into rotational speed).

Then in S204, a designed value of gear ratio that has currently been set is calculated on the basis of gear-shift stage information that has been set in the SMT control portion 20 and the differential 62, using an equation: designed gear ratio = (gear ratio that has been set in the gear-shift mechanism portion 40) * (gear ratio of the differential 62). That is, the designed value of gear ratio is calculated as a total gear ratio.

Then in S206, since a degree of transmission (transmission efficiency) of engine output through the clutch corresponds to a degree of engagement of the clutch, the degree of engagement of the clutch is evaluated. In this case, as an example, a value of (estimated gear ratio / designed gear ratio) is calculated on the basis of calculation results in S202 and S204, and the calculated value is set as a clutch engagement evaluating value (clutch engagement evaluating value = estimated gear ratio / designed gear ratio).

If the gear-shift mechanism portion 40 is at a certain gear-shift stage, the amount of slip in the clutch increases in proportion to a decrease in degree of engagement of the clutch. Accordingly, the difference between an engine speed and a converted value obtained by converting an average speed of the driving wheels into a rotational speed increases, and the estimated gear ratio increases. Thus, it is possible to estimate that the degree of engagement of the clutch decreases as the clutch engagement evaluating value (hereinafter referred to simply as "evaluating value") increases from 1.

Thus, in S208, it is then determined whether or not the evaluating value calculated in S206 is greater than 0.8 and smaller than 1.2. In S208, an estimated error of gear ratio is taken into account. If the evaluating value calculated in S206 is greater than 0.8 and smaller than 1.2, it is determined that the clutch has been sufficiently engaged. If the evaluated value has increased and become equal to or greater than 1.2, it is determined, for example, that the clutch is in a disengaged state or a half-engaged state with a reduced degree of engagement of the clutch (a reduced degree of transmission of engine output).

If the evaluating value calculated in S206 is greater than 0.8 and smaller than 1.2 (if the result in S208 is determined as "Yes"), the operation proceeds to S210, and later-described correction coefficients K1 (0≤K1≤1) K2 (0≤K2≤1) are set equal to 1, 1 respectively. The operation then proceeds to S212.

In S212, Tᵤₚ, T_{dw} are set equal to K1*α, K2*β respectively. "Tᵤₚ" represents a change amount that is set in increasing a TRC target torque that has currently been set, and "α" represents a prescribed torque value (constant). Further, "T_{dw}" represents a change amount that is set in reducing a TRC target torque that has currently been set, and "β" is a prescribed torque value (constant). Thus, if the evaluating value is greater than 0.8 and smaller than 1.2, Tᵤₚ, T_{dw} are set as they are with α and β remaining unchanged.

The operation then proceeds to S214, and it is determined whether or not an average speed of the driving wheels at this moment is higher than a control target value set in TRC.

If the average speed of the driving wheels is higher than the control target value (if the result of S214 is determined as "Yes") as a result, the operation proceeds to S216. In S216, a counter value of a grip state counter (n) for counting a time that has elapsed during a shift of the wheels toward a gripping tendency is first of all reset as zero. It is to be noted herein that "(n)" represents a set value in the present routine and that "(n-1)" represents a set value in the last routine.

Then in S218, a counter value of a slip state counter for counting a time that has elapsed during a shift of the wheels toward a slipping tendency is incremented. Then in S220, it is determined whether or not the counter value of the slip state counter (n) has exceeded a predetermined slip criterion time. If the counter value of the slip state counter (n) has not exceeded the slip criterion time (if the result of S220 is determined as "No") as a result, the present routine is terminated immediately. On the other hand, if the counter value of the slip state counter (n) has exceeded the slip criterion time (if the result of S220 is determined as "Yes"), the operation proceeds to S222. In S222, a TRC target torque (n) is set equal to a TRC target torque (n-1)-T_{dw}. The operation then proceeds to S224, the counter value of the slip state counter is reset as zero, and the present routine is terminated.

Thus, in the processings in S214 to S224, if the average speed of the driving wheels is higher than the control target value set in TRC, a control processing of reducing the TRC target torque by T_{dw} is performed at intervals of a time defined by the slip criterion time.

On the other hand, if the average speed of the driving wheels is equal to or lower than the control target value that is set in TRC, the result of S214 is determined as "No", and the operation proceeds to S226. In S226, the counter value of the slip state counter (n) for counting a time that has elapsed during a shift of the wheels toward a slipping tendency is first of all reset as zero. Then in S228, the count value of the grip state counter for counting a time that has elapsed during a shift of the wheels toward a gripping tendency is incremented. Then in S230, it is determined whether or not the count value of the grip state counter has exceeded a predetermined grip criterion time. If the counter value of the grip state counter (n) has not exceeded the grip criterion time (if the result of S230 is determined as "No") as a result, the present routine is terminated immediately. On the other hand, if the count value of the grip state counter (n) has exceeded the grip criterion time (if the result of S230 is determined as "Yes"), the operation proceeds to S232, and the TRC target torque is set as TRC target torque (n) = TRC target torque (n-1) + Tᵤₚ. The operation then proceeds to S244, the counter value of the grip state counter is reset as zero, and the present routine is terminated.

Thus, in the processings in S214 and S226 to S234, if the average speed of the driving wheels is equal to or lower than the control target value set in TRC, a control processing of increasing the TRC target torque by Tᵤₚ is performed at intervals of a time defined by the grip criterion time.

A series of such control processings are repeatedly performed if the evaluating value indicating a state of engagement of the clutch is greater than 0.8 and smaller than 1.2. However, if the evaluating value has become equal to or greater than 1.2 as a result of a decrease in degree of engagement of the clutch based on a gear change operation during the performance of TRC, the result of the aforementioned S208 is determined as "No". The operation then proceeds to S236, and the correction coefficients K1, K2 are set on the basis of this evaluating value.

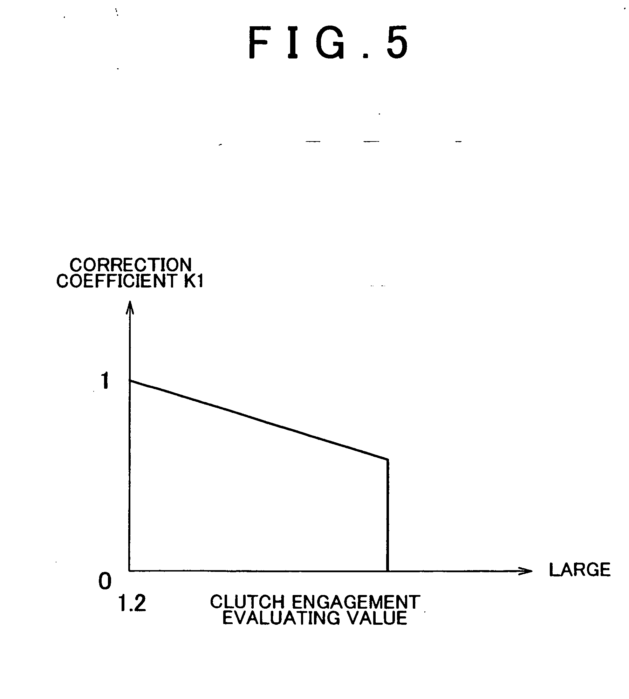

Fig. 5 shows an example in which the correction coefficient K1 is set in accordance with an evaluating value. In this example, the correction coefficient is set as a value that decreases from 1 in proportion to an increase in the evaluating value from 1.2, that is, in proportion to a decrease in the degree of engagement of the clutch. If this evaluating value has increased and become greater than a predetermined value, the clutch is regarded as having been disengaged completely, and the correction coefficient K1 is set equal to 0. It is to be noted herein that the evaluating value and the correction coefficient K2 also establish a relationship that is not shown but that is similar to the relationship shown in Fig. 5.

After the correction coefficients K1, K2 have thus been set in S236 in accordance with the evaluating value, the operation proceeds to S212. Because Tᵤₚ and T_{dw} are set equal to K1*α and K2*β respectively in S212. Tᵤₚ and T_{dw} are set as values that decrease in proportion to a decrease in the degree of engagement of the clutch.

Thus, owing to the later performance of the processings S222 and S232, changes in the TRC target torque (n) are suppressed in proportion to a decrease in the degree of engagement of the clutch, and changes in the case where the degree of engagement of the clutch has again returned into a range of 0.8 < evaluating value < 1.2 can be suppressed sufficiently.

In the above-mentioned embodiment, the degree of engagement of the clutch is determined on the basis of a relationship between estimated gear ratio and designed gear ratio. However, this example is not obligatory. For example, it is also possible to determine a degree of engagement of the clutch on the basis of a stroke of the clutch or a bearing stress applied to a surface of the clutch.

As has been described hitherto, the vehicular control device in accordance with one aspect of the invention is provided with the engine output control portion that controls engine output in consideration of both a transmission degree of output and a slip state of the driving wheels. Therefore, even in the case where the degree of transmission in the clutch mechanism portion has changed, it is possible to suitably perform a control of suppressing slip of the driving wheels.

## Claims

1. A vehicular control device that controls an engine output in accordance with a slip state of driving wheels, comprising:
slip state detecting portion (90) for detecting the slip state of the driving wheels;
clutch mechanism portion (30) for changing a transmission state of an engine output through a change in engagement state;
transmission degree detecting portion (90) for detecting a degree of transmission of the engine output that is transmitted via the clutch mechanism portion (30); and
engine output control portion (70) for controlling an engine output in accordance with a degree of transmission of the engine output detected by the transmission degree detecting portion (90) and the slip state of the driving wheels detected by the slip state detecting portion (90),
**characterized in**
**that** the engine output is reduced if the degree of transmission of the engine output is lower than a predetermined value in the case where the slip state detected by the slip state detecting portion (90) indicates an increasing amount of slip.

2. The control device according to claim 1, **characterized in**
**that** the engine output is increased if the degree of transmission of the engine output is higher than a predetermined value in the case where the slip state detected by the slip state detecting portion (90) indicates a converging amount of slip.

3. The control device according to claim 1 or 2, **characterized in**
**that** the clutch mechanism portion (30) is provided with a first actuator that serves as a drive source for changing a state of engagement, and
**characterized by** further comprising:
gear-shift mechanism portion (40) having a plurality of gear-shift stages for changing a speed of an engine output that is transmitted via the clutch mechanism portion (30) and a second actuator serving as a drive source for changing a meshing state of gear trains constituting each of the gear-shift stages; and
sequential manual transmission control portion (20) for performing operational control of the first actuator and second actuator in accordance with a manual operation for setting a gear-shift stage.

4. The control device according to any one of claims 1 to 3, **characterized in**
**that** the degree of transmission of the engine output is estimated on the basis of a comparison made between a total gear ratio and an estimated gear ratio that is calculated by dividing actual engine speed by engine speed based on rotational speed of the driving wheels.

5. The control device according to any one of claims 1 to 3, **characterized in**
**that** the degree of transmission of the engine output is estimated on the basis of a depression amount of a clutch pedal.

6. The control device according to any one of claims 1 to 3, **characterized in**
**that** the degree of transmission of the engine output is estimated on the basis of a bearing stress applied to a surface of a clutch.

7. A vehicular control method of controlling an engine output in accordance with a slip state of driving wheels, comprising:
a step (S206) of detecting a degree of transmission of the engine output;
a step (S214) of detecting the slip state of the driving wheels; and
a step (S222, S232) of controlling the engine output in accordance with the detected degree of transmission of the engine output and the detected slip state of the driving wheels,
**characterized in**
**that t**he step (S222) of controlling the engine output is designed to reduce the engine output if the degree of transmission of the engine output is lower than a predetermined value during an increase in slip amount.

8. The vehicular control method according to claim 7, **characterized in**
**that** the step (S232) of controlling the engine output is designed to increase the engine output if the degree of transmission of the engine output is higher than a predetermined value during convergence of slip amount.

## Patentansprüche

1. Eine Vorrichtung zur Fahrzeugsteuerung, die eine Leistungsabgabe einer Brennkraftmaschine abhängig von einem Schlupfzustand von Antriebsrädern steuert, wobei die Vorrichtung Folgendes aufweist:
einen Abschnitt (90) zur Schlupfzustandserfassung, um den Schlupfzustand der Antriebsräder zu erfassen;
einen Kupplungsmechanismusabschnitt (30), um einen Übertragungszustand einer Leistungsabgabe der Brennkraftmaschine durch eine Änderung im Eingriffszustand zu ändern;
einen Abschnitt (90) zum Erfassen eines Grads der Übertragung, um einen Grad der Übertragung der Leistungsabgabe der Brennkraftmaschine zu erfassen, die über den Kupplungsmechanismusabschnitt (30) übertragen wird; und
einen Abschnitt (70) zur Steuerung der Leistungsabgabe der Brennkraftmaschine zum Steuern einer Leistungsabgabe der Brennkraftmaschine in Übereinstimmung mit einem Grad der Übertragung der Leistungsabgabe der Brennkraftmaschine, der durch den Abschnitt (90) zum Erfassen des Grads der Übertragung erfasst wird, und des Schlupfzustands der Antriebsräder, der durch den Abschnitt (90) zur Schlupfzustandserfassung erfasst ist, **dadurch gekennzeichnet,**
**dass** die Leistungsabgabe der Brennkraftmaschine verringert wird, wenn der Grad der Übertragung der Leistungsabgabe der Brennkraftmaschine in dem Fall, in dem der Schlupfzustand, der durch den Abschnitt (90) zur Schlupfzustandserfassung erfasst wird, eine steigende Größe des Schlupfs anzeigt, niedriger als ein vorab bestimmter Wert ist.

2. Die Steuervorrichtung nach Anspruch 1, **dadurch gekennzeichnet,**
**dass** die Leistungsabgabe der Brennkraftmaschine erhöht wird, wenn der Grad der Übertragung der Leistungsabgabe der Brennkraftmaschine in dem Fall höher als ein vorab bestimmter Wert ist, in dem der Schlupfzustand, der von dem Abschnitt (90) zur Schlupfzustandserfassung erfasst ist, eine konvergierende Schlupfgröße anzeigt.

3. Die Steuervorrichtung nach Anspruch 1 oder 2, **dadurch gekennzeichnet,**
**dass** der Kupplungsmechanismusabschnitt (30) ein erstes Stellglied aufweist, das als eine Antriebsquelle zur Änderung eines Eingriffszustands dient, und **dadurch gekennzeichnet, dass** sie weiterhin Folgendes aufweist:
einen Gangschaltmechanismusabschnitt (40), der eine Vielzahl von Gangschaltstufen aufweist, um eine Drehzahl einer Leistungsabgabe der Brennkraftmaschine zu ändern, die über den Kupplungsmechanismusabschnitt (30) übertragen wird, und ein zweites Stellglied, das als eine Antriebsquelle zur Änderung eines kämmenden Zustandes von Getriebesträngen dient, die jede der Gangschaltstufen bilden; und
einen Abschnitt (20) zur sequenziellen manuellen Getriebesteuerung zum Durchführen einer Betriebssteuerung des ersten Stellglieds und des zweiten Stellglieds in Übereinstimmung mit einer manuellen Betätigung zur Festlegung einer Gangschaltstufe.

4. Die Steuervorrichtung nach einem der Ansprüche 1 bis 3, **dadurch gekennzeichnet,**
**dass** der Grad der Übertragung der Leistungsabgabe der Brennkraftmaschine auf der Grundlage eines Vergleichs abgeschätzt wird, der zwischen einem Gesamtübersetzungsverhältnis und einem abgeschätzten Übersetzungsverhältnis durchgeführt wird, das berechnet wird, indem die tatsächliche Motordrehzahl durch die Motordrehzahl auf der Grundlage der Drehzahl der angetriebenen Räder dividiert wird.

5. Die Steuervorrichtung nach einem der Ansprüche 1 bis 3, **dadurch gekennzeichnet,**
**dass** der Grad der Übertragung der Leistungsabgabe der Brennkraftmaschine auf der Grundlage einer Größe des Niederdrückens eines Kupplungspedals abgeschätzt wird.

6. Die Steuervorrichtung nach einem der Ansprüche 1 bis 3, **dadurch gekennzeichnet,**
**dass** der Grad der Übertragung der Leistungsabgabe der Brennkraftmaschine auf der Grundlage einer Beanspruchung abgeschätzt wird, die auf eine Oberfläche einer Kupplung wirkt.

7. Ein Verfahren zur Fahrzeugsteuerung des Steuerns einer Leistungsabgabe einer Brennkraftmaschine in Übereinstimmung mit einem Schlupfzustand von Antriebsrädern, das Folgendes aufweist:
einen Schritt (S206) des Erfassens eines Grads der Übertragung der Leistungsabgabe der Brennkraftmaschine;
einen Schritt (S214) des Erfassens des Schlupfzustands der Antriebsräder; und
einen Schritt (S222, S232) des Steuern der Leistungsabgabe der Brennkraftmaschine in Übereinstimmung mit dem erfassten Grad der Übertragung der Leistungsabgabe der Brennkraftmaschine und dem erfassten Schlupfzustand der Antriebsräder, **dadurch gekennzeichnet,**
**dass** der Schritt (S222) der Steuerung der Leistungsabgabe der Brennkraftmaschine so konzipiert ist, dass die Leistungsabgabe der Brennkraftmaschine verringert wird, wenn der Grad der Übertragung der Leistungsabgabe der Brennkraftmaschine während einer Erhöhung der Schlupfgröße niedriger als ein vorab bestimmter Wert ist.

8. Das Verfahren zur Fahrzeugsteuerung nach Anspruch 7, **dadurch gekennzeichnet,**
**dass** der Schritt (S232) der Steuerung der Leistungsabgabe der Brennkraftmaschine so konzipiert ist, dass er die Leistungsabgabe der Brennkraftmaschine erhöht, wenn der Grad der Übertragung der Leistungsabgabe der Brennkraftmaschine während eines Konvergierens der Schlupfgröße höher als ein vorab bestimmter Wert ist.

## Revendications

1. Dispositif de contrôle de véhicule qui contrôle une sortie du moteur en fonction d'un état de glissement des roues d'entraînement,
comprenant :
une partie de détection d'état de glissement (90) pour détecter l'état de glissement des roues d'entraînement ;
une partie de mécanisme d'embrayage (30) pour changer un état de transmission d'une sortie du moteur par un changement de l'état d'engrènement ;
une partie de détection du degré de transmission (90) pour détecter un degré de transmission de la sortie du moteur qui est transmise par la partie de mécanisme d'embrayage (30) ; et
une partie de contrôle de sortie du moteur (70) pour contrôler la sortie du moteur en fonction d'un degré de transmission de la sortie du moteur détecté par la partie de détection du degré de transmission (90) et l'état de glissement des roues d'entraînement détecté par la partie de détection d'état de glissement (90),
**caractérisé**
**en ce que** la sortie du moteur est réduite si le degré de transmission de la sortie du moteur est inférieur à une valeur prédéterminée dans le cas où l'état de glissement détecté par la partie de détection d'état de glissement (90) indique une augmentation de la quantité de glissement.

2. Dispositif de contrôle selon la revendication 1, **caractérisé**
**en ce que** la sortie du moteur est accrue si le degré de transmission de la sortie du moteur est supérieur à une valeur prédéterminée dans le cas où l'état de glissement détecté par la partie de détection d'état de glissement (90) indique une convergence de la quantité de glissement.

3. Dispositif de contrôle selon la revendication 1 ou 2, **caractérisé**
**en ce que** la partie de mécanisme d'embrayage (30) est équipée d'un premier actionneur qui sert de source d'entraînement pour changer un état d'engrènement, et
**caractérisé en ce qu'**il comprend de plus :
une partie de mécanisme de changement de vitesse (40) ayant une pluralité d'étages de changement de vitesse pour changer une vitesse de sortie d'un moteur qui est transmise par la partie de mécanisme d'embrayage (30) et un deuxième actionneur servant de source d'entraînement pour changer un état d'engrenage des trains d'engrenage constituant chacun des étages de changement de vitesse ; et
une partie de contrôle manuel séquentiel (20) pour effectuer un contrôle opérationnel du premier actionneur et du deuxième actionneur en fonction d'une opération manuelle pour régler un étage de changement de vitesse.

4. Dispositif de contrôle selon l'une quelconque des revendications 1 à 3, **caractérisé**
**en ce que** le degré de transmission de la sortie du moteur est estimée en se basant sur une comparaison faite entre un rapport d'engrenage total et un rapport d'engrenage estimé qui est calculé en divisant la vitesse réelle du moteur par la vitesse du moteur basée sur une vitesse de rotation des roues d'entraînement.

5. Dispositif de contrôle selon l'une quelconque des revendications 1 à 3, **caractérisé**
**en ce que** le degré de transmission de la sortie du moteur est estimée en se basant sur une quantité d'appui sur la pédale d'embrayage.

6. Dispositif de contrôle selon l'une quelconque des revendications 1 à 3, **caractérisé**
**en ce que** le degré de transmission de la sortie du moteur est estimé en se basant sur une contrainte de compression appliquée à une surface d'un embrayage.

7. Procédé de contrôle de véhicule pour contrôler une sortie du moteur en fonction d'un état de glissement des roues d'entraînement, comprenant :
une étape (S206) de détection d'un degré de transmission de la sortie du moteur ;
une étape (S214) de détection de l'état de glissement des roues d'entraînement ; et
une étape (S222, S232) de contrôle de la sortie du moteur en fonction du degré de transmission de la sortie du moteur détecté et de l'état de glissement des roues d'entraînement détecté,
**caractérisé**
**en ce que** l'étape (S222) de contrôle de la sortie du moteur est conçue pour réduire la sortie du moteur si le degré de transmission de la sortie du moteur est inférieure à une valeur prédéterminée pendant une augmentation de la quantité de glissement.

8. Procédé de contrôle de véhicule selon la revendication 7, **caractérisé**
**en ce que** l'étape (S232) de contrôle de la sortie du moteur est conçue pour augmenter la sortie du moteur si le degré de transmission de la sortie du moteur est supérieure à une valeur prédéterminée pendant une convergence de la quantité de glissement.
